(19) Europäisches Patentamt
European Patent Office
Office européen des brevets

(11) Publication number: 0 576 911 A2

(12) # EUROPEAN PATENT APPLICATION

(21) Application number: 93109604.4

(22) Date of filing: 16.06.93

(51) Int. Cl.5: C08H 1/06, G03C 1/047

(30) Priority: 29.06.92 US 905425

(43) Date of publication of application:
05.01.94 Bulletin 94/01

(84) Designated Contracting States:
DE ES FR GB IT

(71) Applicant: E.I. DU PONT DE NEMOURS AND COMPANY
1007 Market Street
Wilmington Delaware 19898(US)

(72) Inventor: Weatherill, Timothy Donald
922 Fleming Street
Hendersonville, North Carolina 28739(US)

(74) Representative: von Kreisler, Alek, Dipl.-Chem. et al
Patentanwälte
von Kreisler-Selting-Werner
Postfach 10 22 41
D-50462 Köln (DE)

(54) **In situ modification of Gelatin amine groups.**

(57) A modified gelatin and its use in a photographic element are described whereby pendant amine groups of a polypeptide chain are modified by reaction with an activated carboxyl wherein the activated carboxyl group reacts with the pendant amines to form an amide. The modified gelatin decreased propensity for water absorption while maintaining satisfactory sensitometric properties.

EP 0 576 911 A2

## Field of Invention:

This invention relates to gelatin wherein the pendant amine groups of the gelatin are modified to impart practical improvements in the properties thereof. More specifically this invention relates to the addition of antistatic and hydrophobic properties to regions of a gelatin molecule. Even more specifically this invention relates to the use of such modified gelatin in a photographic element.

## Background of the Invention:

Gelatin has long been exploited as a binder in photographic elements wherein silver salts, dyes and other adjuvants are harbored therein. Gelatin is generally considered to be a protein comprising amino acid residues wherein an acid group of an amino acid is linked to the base group of another amino acid to form a polypeptide chain known as gelatin. The amino acid residues typically contain both amine and carboxylic acid moieties which are pendant or branching off of the main polypeptide chain. It is these pendant amines and carboxylic acid moieties which form the basis for many of the properties of gelatin.

For use in a photographic emulsion it is typically preferred to add gelatin and a hardening agent to an aqueous photographic emulsion prior to coating the emulsion on a support. Upon removal of water and other volatiles from the emulsion the peptide coupling or carboxyl activated hardening agent reacts to form bonds between the pendant amines and pendant carboxylic acid groups on the gelatin backbone. The hardening, known in the art as "instant" hardening or crosslinking, imparts a rigidity to the gelatin structure thereby protecting the silver salts, dyes and adjuvants from migrating within the film structure. Gelatin is also advantageous in supplemental layers below or above the emulsion for abrasion protection, dye localization and the like.

Prior to displaying an exposed photographic element it is typically necessary to process the image either by heat or by chemicals as known in the art. Chemical processing involves introducing the photographic element to various chemicals which develop the image and remove excess silver salts, dyes and adjuvants. After chemical processing the photographic element is preferably dryed thereby providing an image. The pendant amines are detrimental to the drying process due to the propensity with which they absorb excessive water. Therefore it has long been desired in the art to block or more fully crosslink the gelatin amines to provide a film element which can be dried more rapidly and thoroughly.

Methods to modify the gelatin are provided by Roche, et al. in U.S. Patent 4,978,607 wherein the amine groups are modified by various groups. The modifying compounds of Roche are deficient since they have a propensity to react with a variety of groups such as carboxyls, alcohols and the like and are therefore extremely difficult to control or to predict the final product which will be obtained. Furthermore, the materials with which a gelatin can be modified are limited to compounds which can be generated comprising the toxic groups detailed. Preparation of toxic compounds greatly increases the manufacturing difficulty and therefore the manufacturing cost. There has been a long felt need in the art to provide a means for modifying gelatin which is selective to the pendant amines and which can be used with a variety of substituents.

Yet another long felt need in the art is a means of decreasing the effect of static electricity generated as a photographic element traverses through various automatic processing machines. This has been accomplished by various techniques as known in the art all of which require either a supplemental layer with antistatic adjuvants or the use of various surfactants within the photographic emulsion. Auxiliary layers require an additional manufacturing step which is undesirable and surfactants within the photographic element are known to migrate and can affect the sensitometric performance of the film.

## Summary of the Invention:

A gelatin is provided whereby the pendant amine groups are modified to form amides. Furthermore, the properties of the gelatin can be modified for improved static performance, decreased water absorption and the like. These and other improvements are provided in a modified gelatin and its incorporation into a photographic element formed from gelatin containing pendant amine groups and pendant carboxylic groups wherein at least one amine group of said gelatin is modified to form an amide of the formula -NHCOR. The process typically involves reaction of an amine group with an activated carboxyl, i.e. a reaction product of a carboxyl activating agent and carboxylic acid, i.e., RCOOH wherein R represents substituted or unsubstituted alkyl of 1-10 carbons, substituted or unsubstituted aryl of 6-14 carbons,or substituted or unsubstituted arylalkyl of 7-20 carbons.

Detailed Description of the Invention:

In solution, gelatin forms interconnected strands which may be held in close proximity by a multitude of intramolecular and intermolecular hydrogen bonds. These interconnected strands impart many of the inherent properties of gelatin such as the ability to set upon drydown or cooling. Also inherent in gelatin strands are a multitude of pendant carboxylic acid groups and amine groups as illustrated below:

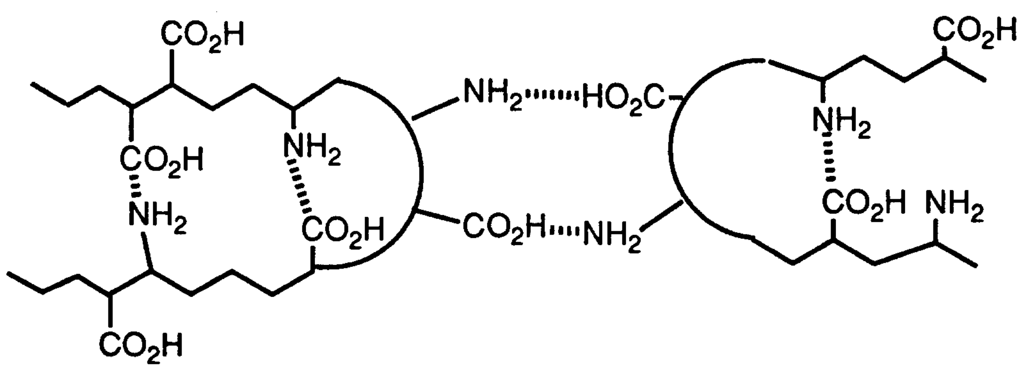

It is well known in the art that crosslinking or hardening of the gelatin replaces the hydrogen bond with a more rigid amide bond thereby substantially maintaining the relative orientation of the strands of gelatin with a minor effect on the bulk of the pendant carboxylic acid and pendant amine groups as illustrated below:

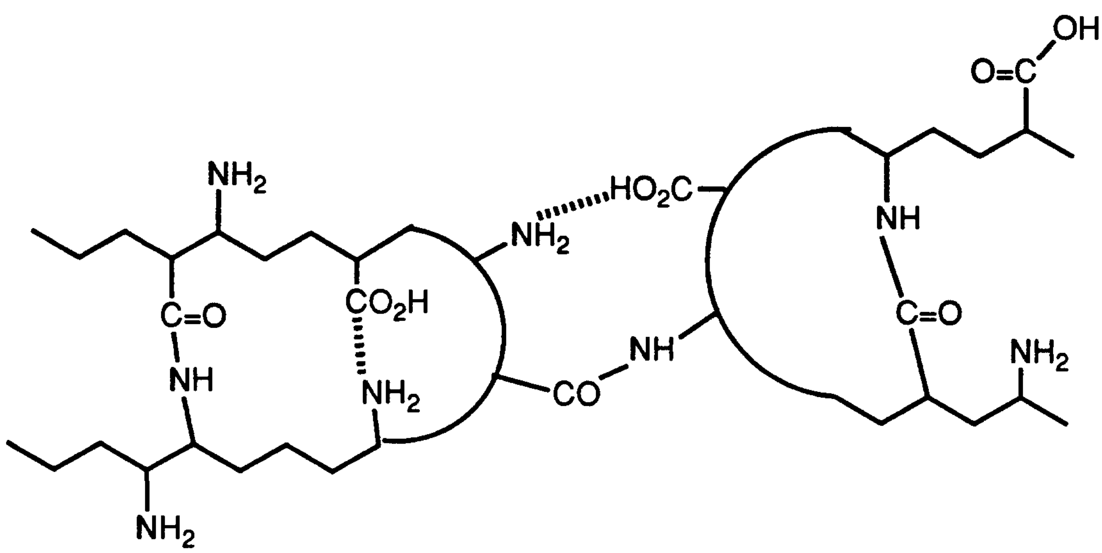

The teachings of this invention exploit the pendant amine groups by modification thereof wherein the amines are linked with an activated carboxyl group to form an amide. An activated carboxyl is formed by the reaction of a carboxylic acid with a carboxyl activating agent, AX, according to the reaction

| | | | | |
|---|---|---|---|---|
| R-COOH | + | AX | ---> | "R-$CO_2$-X" |
| Carboxylic Acid | | Carboxyl Activating Agent | | Activated Carboxyl |

AX represents a carboxyl activator which is chosen such that an intermediate formed therefrom will react with an amine to form the amide. In the formula AX, A is capable of displacement from X upon nucleophilic attack by a carboxylic acid and X is capable of displacement from the activated carboxyl upon nucleophilic attack by an amine. The activated carboxyl then reacts with an amine to form an amide according substantially to the following reaction

| | | | | |
|---|---|---|---|---|
| "$R-CO_2-X$" | + | $R'_2NH$ | ---> | $R-CO-NR'_2$ |
| Activated Carboxyl | | Amine | | Amide |

When the amine is a pendant group on gelatin the gelatin is modified with the resulting structure being substantially as illustrated below:

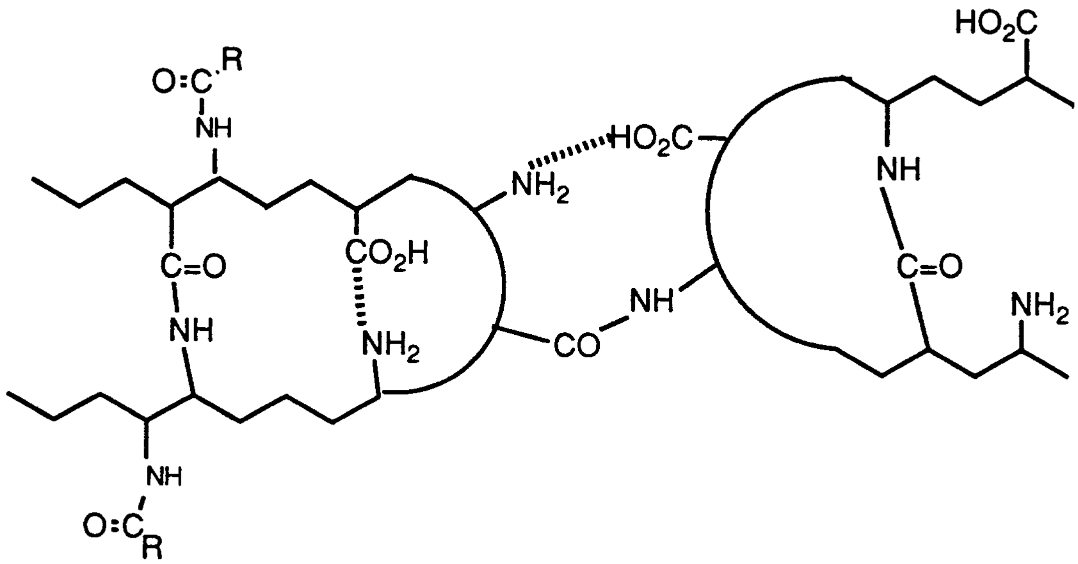

The formation of amides is preferably accomplished in solution at a pH which is above the isoelectric point of the gelatin. Carboxylic acids substituents, i.e., R in the above formulas, which are included within the teachings of the present invention include substituted or unsubstituted alkyl of 1-10 carbons, substituted or unsubstituted aryl of 6-14 carbons, and substituted or unsubstituted arylalkyl of 7-20 carbons. Preferred substitutions include but are not limited to fluorine, chlorine, alcohol, amines, and the like. More preferred are those carboxylic acids which contain at least one compact but highly hydrophobic group such as branched alkyls, substituted or unsubstituted fused rings and the like. Particularly preferred carboxylic acids include those substituted by t-butyl, cyclohexyl, norbornane, norbornylene, norbornadiene, adamantane or similar groups. The most preferred carboxylic acid is adamantane amine. Substituted or unsubstituted fluorinated alkyl, substituted or unsubstituted fluorinated aryl, substituted or unsubstituted fluorinated arylakyl groups are preferred for use as an antistatic adjuvant. The carboxylic acid moiety is understood from the teachings herein to be different from gelatin.

Carboxyl activating agents suitable for use in the teachings herein are legion in number with the proviso that the carboxyl activator is capable of forming an amide when the activated carboxyl formed therefrom is allowed to react with an amine. The carboxyl activating agents as referenced in the prior art by different nomenclature, e.g., hardeners and peptide couplers. Exemplary examples are taught in U.S. Patent 4,942,068 and include but are not limited to

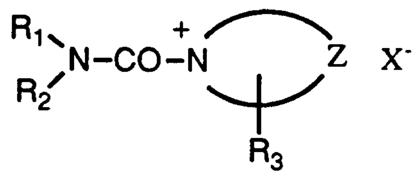

(a)

wherein

$R_1$ represents alkyl, aryl or arylakyl,

$R_2$ has the same meaning as $R_1$ or represents alkylene, arylene, aralkylene or alkaralkylene, the second bond being attached to the group corresponding to the following formula

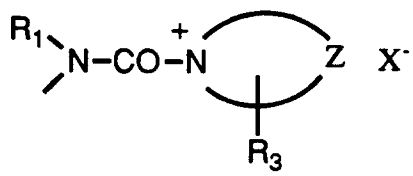

or

$R_1$ and $R_2$ together represent the atoms required to complete an optionally substituted heterocyclic ring, for example a piperidine, piperazine or morpholine ring, the ring optionally being substituted, for example, by $C_1$-$C_3$ alkyl or halogen,

$R_3$ represents hydrogen, alkyl, aryl, alkoxy, $-NR_4-COR_5$, $-(CH_2)_m-NR_8R_9$, $-(CH_2)_n-CONR_{13}R_{14}$ or

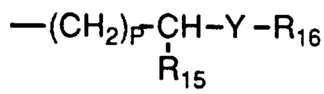

or a bridge member or a direct bond to a polymer chain,

$R_4$, $R_6$, $R_7$, $R_9$, $R_{14}$, $R_{15}$, $R_{17}$, $R_{18}$ and $R_{19}$ being hydrogen or $C_1$-$C_4$ alkyl,

$R_5$ represents hydrogen, $C_1$-$C_4$ alkyl or $NR_6R_7$,

$R_8$-$COR_{10}$,

$R_{10}$ represents $NR_{11}R_{12}$,

$R_{11}$ represents $C_1$-$C_4$ alkyl or aryl, more especially phenyl,

$R_{12}$ represents hydrogen, $C_1$-$C_4$ alkyl or aryl, more especially phenyl,

$R_{13}$ represents hydrogen, $C_1$-$C_4$ alkyl or aryl, more especially phenyl,

$R_{16}$ represents hydrogen, $C_1$-$C_4$ alkyl, $COR_{18}$ or $CONHR_{19}$,

m is 1 to 3,

n is 0 to 3,

p is 2 to 3 and

Y represents O or $NR_{17}$ or

$R_{13}$ and $R_{14}$ together represent the atoms required to complete a substituted or unsubstituted heterocyclic ring, for example a piperidine, piperazine or morpholine ring, the ring optionally being substituted, for example, by $C_1$-$C_3$ alkyl or halogen,

Z represents the carbon atoms required to complete a 5-membered or 6-membered aromatic heterocyclic ring, optionally with a linked benzene ring, and

$X^-$ is an anion which is dropped if an anionic group is already attached to the remainder of the molecule;

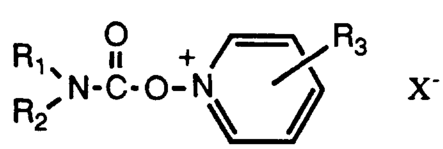

(b)

wherein

$R_1$, $R_2$, $R_3$ and $X^-$ have the same meaning as defined for formula (a);

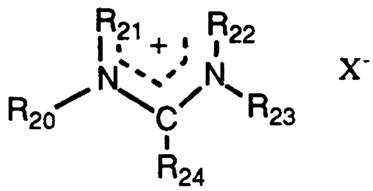

(c)

wherein

$R_{20}$, $R_{21}$, $R_{22}$, $R_{23}$ represent $C_1$-$C_{20}$ alkyl, $C_6$-$C_{20}$ aralkyl, $C_5$-$C_{20}$ aryl, either unsubstituted or substituted by halogen, sulfo, $C_1$-$C_{20}$ alkoxy, N,N-di-$C_1$-$C_4$-alkyl-substituted carbamoyl and, in the case of aralkyl and aryl, by $C_1$-$C_{20}$ alkyl,

$R_{24}$ is a group releasable by a nucleophilic agent and

$X^-$ has the same meaning defined for formula (a); 2 or 4 or the substituents $R_{20}$, $R_{21}$, $R_{22}$ and $R_{23}$ may even be combined together with a nitrogen atom or the group

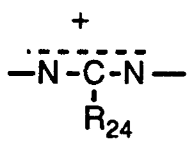

optionally with inclusion of further heteroatoms, such as O or N, to form one or two saturated 5-7-membered rings;

$R_{25}$-N = C = N-$R_{26}$ (d)

in which

$R_{25}$ represents $C_1$-$C_{10}$ alkyl, $C_5$-$C_8$ cycloalkyl, $C_3$-$C_{10}$ alkoxyalkyl or $C_7$-$C_{15}$ aralkyl,

$R_{26}$ has the same meaning as $R_{25}$ or represents a group corresponding to the following formula

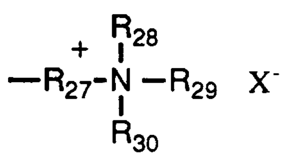

where

$R_{27}$ is $C_2$-$C_4$ alkylene and

$R_{28}$, $R_{29}$ and $R_{30}$ represent $C_1$-$C_6$ alkyl; one of the groups $R_{28}$, $R_{29}$ and $R_{30}$ may be substituted by a carbamoyl group or a sulfo group and two of the groups $R_{28}$, $R_{29}$ and $R_{30}$ may even be attached, together with the nitrogen atom, to form an optionally substituted heterocyclic ring, for example a pyrrolidine, piperazine or morpholine ring which may be substituted, for example, by $C_1$-$C_3$ alkyl or halogen, and

$X^-$ has the same meaning as defined for formula (a);

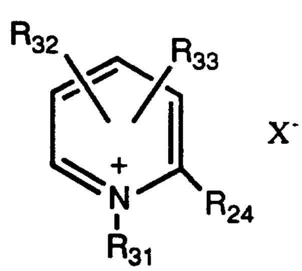

(e)

in which

$X^-$ has the same meaning as defined for formula (a),

$R_{24}$ has the same meaning as defined for formula (c),

$R_{31}$ represents $C_1$-$C_{10}$ alkyl, $C_6$-$C_{15}$ aryl or $C_7$-$C_{15}$ aralkyl, either substituted or unsubstituted by carbamoyl, sulfamoyl or sulfo,

$R_{32}$ and $R_{33}$ represent hydrogen, halogen, acylamino, nitro, carbamoyl, ureido, alkoxy, alkyl, alkenyl, aryl or aralkyl or together the remaining members of a ring, more especially a benzene ring, fused to the pyridinium ring;

$R_{24}$ and $R_{31}$ may be attached to one another where $R_{24}$ is a sulfonyloxy group;

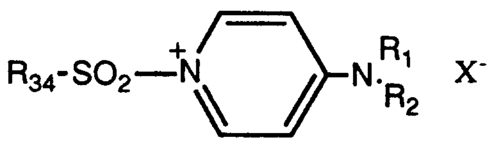

(f)

in which

$R_1$, $R_2$ and $X^-$ have the same meaning as defined for formula (a) and

$R_{34}$ represents $C_1$-$C_{10}$ alkyl, $C_6$-$C_{14}$ aryl or $C_7$-$C_{15}$ aralkyl;

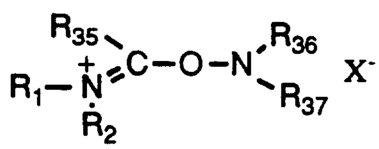

(g)

in which

$R_1$, $R_2$ and $X^-$ have the same meaning as defined for formula (a),

$R_{35}$ represents hydrogen, alkyl, aralkyl, aryl, alkenyl, $R_{38}O$-, $R_{39}R_{40}N$-, $R_{41}R_{42}C=N$- or $R_{38}S$-,

$R_{36}$ and $R_{37}$ represent alkyl, aralkyl, aryl, alkenyl,

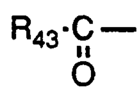

$R_{44}$-$SO_2$ or

$R_{45}$-N=N- or, together with the nitrogen atom, represent the remaining members of a heterocyclic ring or the group

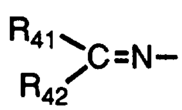

$R_{38}$, $R_{39}$, $R_{40}$, $R_{41}$, $R_{42}$, $R_{43}$, $R_{44}$ and $R_{45}$ represent alkyl, aralkyl, alkenyl, in addition to which $R_{41}$ and $R_{42}$ may represent hydrogen; in addition, $R_{39}$ and $R_{40}$ or $R_{41}$ and $R_{42}$ may represent the remaining members of a 5- or 6- membered, saturated carbocyclic or heterocyclic ring;

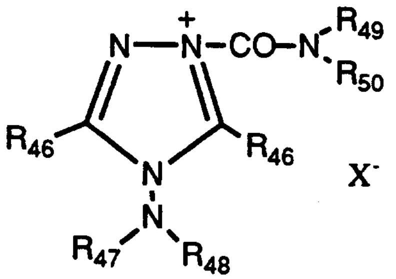

(h)

wherein

$R_{46}$ represents hydrogen, alkyl or aryl,

$R_{47}$ represents acyl, carbalkoxy, carbamoyl or aryloxycarbonyl;

$R_{48}$ represents hydrogen or $R_{47}$,

$R_{49}$ and $R_{50}$ represent alkyl, aryl, aralkyl or, together with the nitrogen atom, represent the remaining members of an optionally substituted heterocyclic ring, for example a piperidine, piperazine or morpholine ring, which may be substituted for example by $C_1$-$C_3$ alkyl or halogen, and

$X^-$ has the same meaning as defined for formula (a).

A particularly preferred carboxyl activator is described in Rüger, U.S. Patent Application No. 07/817,629 filed 1/7/92 and includes:

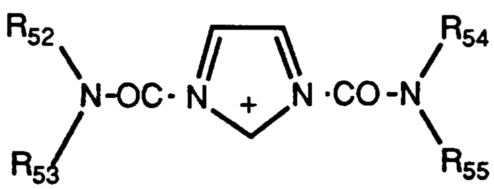

(h)

wherein $R_{52}$, $R_{53}$, $R_{54}$ and $R_{55}$ independently represent a substituted or unsubstituted alkyl of 1-3 carbon atoms, a substituted or unsubstituted aryl group of 6-14 carbons, a substituted or unsubstituted arylalkyl group of 7-20 carbons, $R_{52}$ and $R_{53}$ or $R_{54}$ and $R_{55}$ may be taken together to for a substituted or unsubstituted 5- or 6-membered saturated ring comprising carbon, oxygen, nitrogen or combinations thereof, $X^-$ is an anion, the imidazole ring may be substituted with an alkyl group of 1-3 carbon atoms. Other useful carboxyl activators include, but are not limited to those described in U.S. Patent 5,073,480; U.S. Patent 4,877,724 and those discussed in M. Bodanszky, Principles of Peptide Synthesis, Springer-Verlag, 1984.

The term "gelatin" as used herein refers to the protein substances which are formed from collagen. In the context of the present invention "gelatin" also refers to substantially equivalent substances such as synthetic analogues of gelatin. Generally gelatin is classified as alkaline gelatin, acidic gelatin or enzymatic gelatin. Alkaline gelatin is obtained from the treatment of collagen with a base such as calcium hydroxide, for example. Acidic gelatin is that which is obtained from the treatment of collagen in acid such as, for example, hydrochloric acid and enzymatic gelatin is generated with a hydrolase treatment of collagen. The teachings of the present invention are not restricted to gelatin type or the molecular weight of the gelatin with the proviso that after preparation of the gelatin a sufficient number of pendant amine groups remain for reactivity as taught herein. Amine-containing polymers or copolymers can be modified as taught herein so as to lessen water absorption without degrading the desirable properties associated with such polymers and copolymers.

Gelatin which has been modified according to the teachings herein find exemplary utility as a binder in a photographic emulsion or as a means of suspending silver grains during the preparation thereof. Photographic emulsion which may be considered applicable to the teachings herein include, but are not limited to, positive and negative working systems. Other adjuvants may be added to the photographic emulsion as known in the art including, but not limited to, chemical and spectral sensitizers, brighteners, antifoggants and stabilizers, color materials, light scattering and absorbing materials, other binder additives, other hardeners, coating aids, plasticizers and lubricants, antistatic agents and layers, matting agents, development agents, development modifiers and the like as detailed in Research Disclosure, December 1989, Item 308119. It is typical to coat the photographic emulsion on a suitable support, followed by drying,

exposing, processing and the like as reviewed in detail in Research Disclosure, December 1989, Item 308119.

Modification of the gelatin for use in a photographic element can be done after the photographic emulsion is prepared or the gelatin can be modified prior to addition to an emulsion.

The following illustrative examples further elaborate on the teachings herein and are not intended to limit the scope of the present invention. All amounts and percentages are by weight unless otherwise specified.

EXAMPLE 1

An 8% nondeionized gelatin solution containing saponin as a coating aid was used as a binder. Formaldehyde or the peptide coupler Formula HA was added to Samples 1-4. Varying amounts of

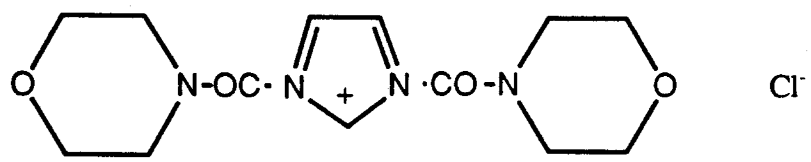

HA

a solution containing 1-adamantane carboxylic acid (ACA) and one equivalent of HA were added to samples 5-7. The pH of the gelatin solutions were maintained at 5.80. The solutions were then either directly coated or treated with varying amounts of hardener and coated immediately onto resin- and gelatin-subbed polyethylene terephthalate base with a #40 Mayer rod. The films were air dried at room temperature for three days. Melt points were measured in 0.1 M NaOH. Water absorption was determined by weighing a dry 10x10 cm film sample, submerging the sample in deionized water for 30 minutes, allowing the excess water to drain off the film, and weighing the swollen film. Water absorption was defined as

$$WA\ (mg/cm^2) = \frac{\text{Wet weight - Dry weight (mg)}}{100\ cm^2}$$

TABLE 1

| Sample | Reactants mMol/g gel | | Melt-point (°C) | WA |
|---|---|---|---|---|
| 1 CONTROL | HCHO | 0.035 | 55 | 4.9 |
| 2 CONTROL | HA | 0.05 | 54 | 5.6 |
| 3 CONTROL | HA | 0.10 | 74 | 5.0 |
| 4 CONTROL | HA | 0.20 | 85 | 4.3 |
| 5 INVENT. | HA/ACA | 0.05/0.05 | 35 | 5.5 |
| 6 INVENT. | HA/ACA | 0.10/0.10 | 35 | 5.4 |
| 7 INVENT. | HA/ACA | 0.20/0.20 | 35 | 5.5 |
| 8.CONTROL | NONE | ------ | 35 | 9.0 |

The data from Table 1 illustrates that crosslinking is absent when activated 1-adamantane carboxylic acid (ACA) is added to gelatin, but water absorption is greatly reduced compared with sample 8 which is unhardened control. Therefore, gelatin can be modified in such a way that its water absorption characteristics are lowered without crosslinking.

EXAMPLE 2

Approximately 2.9 mMol of mixed $R_fCH_2CH_2CO_2H$ ($R_f$ = $C_6$-$C_{14}F_x$, x=2C-1) was dissolved in 12 g of $CH_3CN$ and treated with 2.8 mMol of 1-morpholinocarbonyl pyridinium chloride (HB). The solution was stirred at room temperature for 5 minutes. Aliquots of this solution were added in varying amounts to 25 gram samples of 8% nondeionized gelatin solutions. The treated gelatin solutions were then coated with a

Mayer rod onto resin- and gelatin-subbed polyethylene terephthalate base. The films were air dried at room temperature for one day. Melt points (MP) and water absorption were measured as detailed above. Static discharge half-lifes were measured at 15% relative humidity and 72°F with a Monroe discharge device interfaced to a minicomputer as known in the art. The lower the half-life, the more resistant the coating is to static artifacts and dust attraction.

TABLE 2

| Activated Acid Additional HB | | | | |
|---|---|---|---|---|
| Sample Added | Added | MP | WA | $t_{1/2(s)}$ |
| 1 Control 0 | 10 | 87 | 6.5 | 175 |
| 2 Invent.20 | 0 | 30 | 8.0 | 107 |
| 3 Invent.40 | 0 | 30 | 8.9 | 80 |
| 4 Invent.80 | 0 | 30 | 8.3 | 30 |
| 5 Invent.20 | 10 | 79 | 5.9 | 166 |
| 6 Invent.40 | 10 | 77 | 6.3 | 81 |

The addition of an activated fluorinated carboxylic acid substantially decreases the resistance to static artifacts as determined by Monroe discharge measurements. This advantage can be accomplished with minor changes in the melt point of the gelatin as illustrated by samples 2-4.

EXAMPLE 3

A blue sensitive tabular AgBr grain X-ray emulsion was prepared in accordance with Fabricius and Welter, U.S. Patent 5,108,887 with 0.64 grams of gelatin per gram of silver bromide. The resulting emulsion was treated with varying amounts of ACA and coated at a silver coating weight of 2.2 g Ag/M2. Formaldehyde or

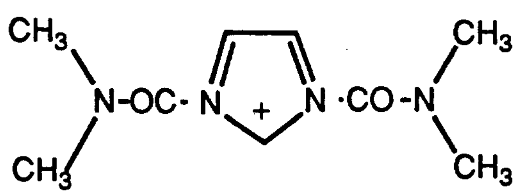

H-2

A chloride salt of H-2 hardener was added to the emulsion just prior to coating at a level of 0.15 mMol/g gelatin for H-2 or 0.10 mMol/g gelatin for formaldehyde. The films were stored under ambient conditions for two weeks and tested for meltpoint and water absorption as detailed above and for sensitometric performance in accordance with the method described in Fabricius referenced above. The data obtained is included in Table 3.

TABLE 3

| | AA | Hardener | MP | WA | SP | MG | DM |
|---|---|---|---|---|---|---|---|
| Comparative | 0 | HCHO | 73 | 4.9 | 100 | 4.34 | 2.26 |
| Comparative | 0 | H-2 | 69 | 4.7 | 134 | 4.88 | 3.15 |
| Inventive | 0.033 | H-2 | 70 | 4.6 | 119 | 4.86 | 2.95 |
| Inventive | 0.10 | H-2 | 66 | 4.5 | 118 | 4.81 | 3.27 |

wherein the amount of AA added is mMol/g gelatin, MP and WA are as described above, SP is relative photographic speed, MG is mid gradient, and DM is the maximum density obtained.

The data in Table 3 shows that modification of the gelatin amine groups with ACA suppresses meltpoint by occupying crosslinkable sites but still produces films with lower affinity compared with either HCHO or H-2 hardened controls.

## Claims

1. A process for formation of a modified gelatin containing pendant amine groups and pendant carboxylic groups wherein at least one pendant amine group of said gelatin is modified to form an amide by reacting said amine of the gelatin with a reaction product of a carboxyl activator and RCOOH wherein R represents substituted or unsubstituted alkyl of 1-10 carbons, substituted or unsubstituted aryl of 6-14 carbons, or substituted or unsubstituted arylalkyl of 7-20 carbons.

2. The process recited in Claim 9 wherein R is chosen from the set consisting of t-butyl, cyclohexyl, norbornane, norbornylene, norbornadiene and adamantane.

3. The process recited in Claim 9 wherein R is adamantane.

4. The process recited in Claim 9 wherein the carboxylic activator is of the formula AX wherein A is capable of displacement from X upon nucleophilic attack by a carboxylic acid and X is capable of displacement from the activated carboxyl upon nucleophilic attack by an amine.

5. The process recited in Claim 12 wherein at least one said carboxyl activator is chosen from the set consisting of

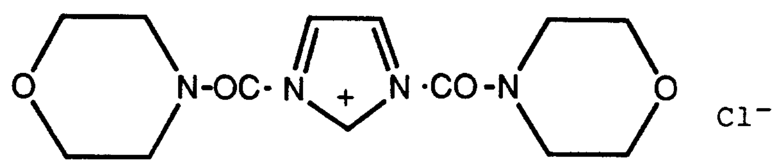

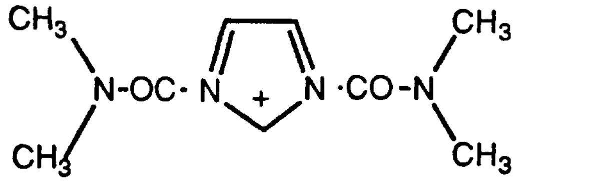

Cl⁻

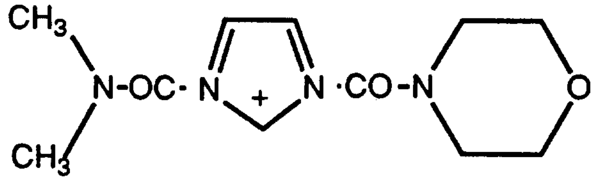

Cl⁻

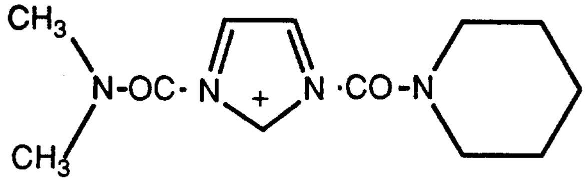

Cl⁻

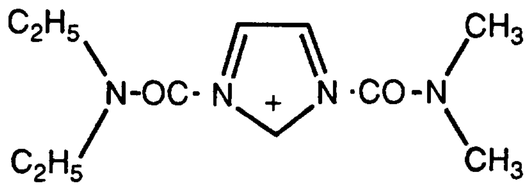

Cl⁻

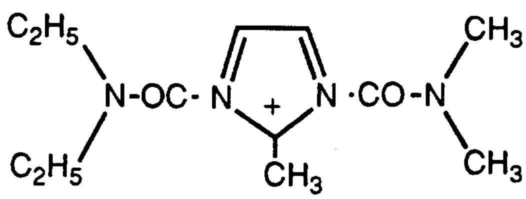

Cl⁻

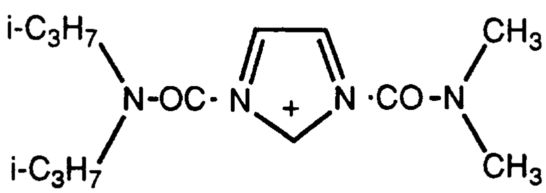

Cl⁻

and

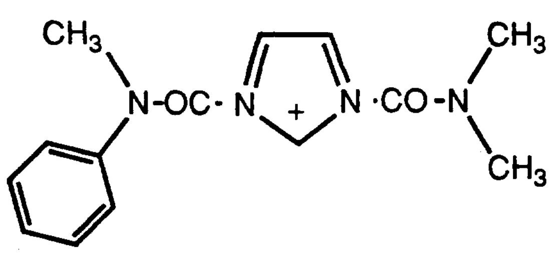

Cl⁻.

**6.** The process recited in Claim 9 wherein a plurality of pendant amines is modified to form amides.